# EUROPEAN PATENT APPLICATION

(11) **EP 1 707 938 A1**
(43) Date of publication of application: **04.10.2006**
(21) Application number: 05703918.2
(22) Date of filing: 20.01.2005
(51) Int. Cl.: G01N 1/00, C12M 1/00, G01N 1/28, G01N 15/00

(54) **MICROORGANISM SEPARATING DEVICE**

(30) Priority: 23.01.2004 JP 2004016082
(71) Applicant: Hitachi Plant Technologies, Ltd., Chiyoda-ku Tokyo 101-0047 (JP)
(72) Inventor: SANO, Tadashi, c/o Hitachi, Ltd., Hitachinaka-shi, Ibaraki 312-0034 (JP); MIYAKE, Ryo, c/o Hitachi, Ltd., Hitachinaka-shi, Ibaraki 312-0034 (JP); SASAKI, Yasuhiko, c/o Hitachi, Ltd., Hitachinaka-shi, Ibaraki 312-034 (JP); SUMINO, Tatsuo, c/o Hitachi Plant Tech., Ltd., Tokyo 101-0047 (JP); ISAKA, Kazuichi, c/o Hitachi Plant Tech., Ltd., Tokyo 101-0047 (JP); IKUTA, Hajime, c/o Itachi Plant Tech., Ltd., Tokyo 101-0047 (JP)
(74) Representative: Strehl Schübel-Hopf & Partner
(86) International application number: PCT/JP2005/000690
(87) International publication number: WO 2005/071386

(57) **Abstract**

A microorganism separation device includes: sample solution supply means (30) for supplying a sample solution (40) stored within a sample solution reservoir (32) to a first flow path (12); a microorganism sensor (22) that is capable of detecting a monadelphous microorganism in the sample solution (40) that passes through the first flow path (12); a controller (24) that stops to supply the sample solution (40) to the first flow path (12) and discharges the detected microorganism together with the sample solution (40) from a termination side of the first flow path (12) on the basis of a detection result of the microorganism by the microorganism sensor (22); and an acceptor (52) that receives a droplet (28) of the sample solution (40) that is discharged from the termination side of the first flow path (12). With the above structure, the microorganisms in the sample solution are separated one by one with high efficiency while the microorganisms remain alive.

## Description

### TECHNICAL FIELD

The present invention relates to a microorganism separation device, and more particularly to a microorganism separation device suitable for a case of separating microorganisms that are dispersed and mixed in a solution one by one.

### BACKGROUND ART

Microorganisms are effectively utilized in diverse fields such as refresher manufacturing or a wastewater treatment. The microorganisms are classified according to the respective characteristics such as lactobacillus or coli bacteria, and those bacteria can be further finely classified. In the case of effectively using the microorganisms, when even the microorganisms that belong to the same group are finely classified, the performances of the respective microorganisms are different from each other. Therefore, it is preferable to use the microorganism most suitable for the intended purpose. To achieve this, it is necessary that the microorganisms that belong to each of the groups are classified into a level of "strains" that have been most finely classified, and the performances of the respective "strains" are compared with each other.

In the case where microorganisms that belong to some kind of "strain" are separated from the microorganisms, the separating operation is generally conducted by hand through a serial dilution method. Also, as a device for measuring particles such as microorganisms, there has been known a particle analyzing device that is disclosed by Patent Document 1. Also, as a device that is capable of automatically separating the microorganisms, there has been known a flow cytometry device. The device irradiates a sample solution that contains microorganisms therein with a light, discriminates the kinds of microorganisms in the solution, and acquires intended microorganisms by a downstream separation mechanism (for example, refer to Patent Document 2).

Patent Document 1: Japanese Patent Laid-Open No. 2000-74816
Patent Document 2: Japanese Patent Laid-Open No. H9-145593

### DISCLOSURE OF THE INVENTION

However, the above-mentioned serial dilution method is low in the efficiency, and the separation effect of the microorganisms is low for the trouble and the costs. Also, the particle analyzing device that is disclosed in Patent Document 1 merely measures the configuration and the number of particles, but provides no function of separating the particles such as the measured microorganisms. Also, in the flow cytometry device that is disclosed in Patent Document 2, it is difficult to detect an object to be measured which is lower than about 10 µm in the diameter. For that reason, the object to be measured is stained with a fluorescent dye, and the fluorescence is measured to recognize the object to be measured. Incidentally, there are predominant microorganisms that are equal to or less than about 10 µm in the diameter. When the microorganisms have been stained, the microorganisms generally die out with the result that the performance of the microorganisms cannot be examined after separation. In other words, the conventional flow cytometry device suffers from such a problem that it is difficult to separate the microorganisms while the microorganisms remain alive.

An object of the present invention is to provide a microorganism separation device that is capable of improving the problems with the above conventional art, and separating microorganisms contained in a sample solution one by one with high efficiency while the microorganisms remain alive.

In order to achieve the above object, according to the present invention, there is provided a microorganism separation device, comprising: a sample solution reservoir that stores a sample solution containing microorganisms therein; sample solution supply means for supplying the sample solution stored within the sample solution reservoir to a first flow path; a microorganism sensor that is capable of detecting a monadelphous microorganism in the sample solution that passes through the first flow path; sample solution separating means for stopping to supply the sample solution to the first flow path and discharging the detected microorganism together with the sample solution from a termination side of the first flow path on the basis of a detection result of the microorganism by the microorganism sensor; and an acceptor that receives the sample solution that is discharged from the termination side of the first flow path.

In the microorganism separating device structured as described above, it is preferable that the sample solution separating means can be controlled so that the sample solution that is discharged from the termination side of the first flow path includes one microorganism. Also, it is possible that the termination of the first flow path is coupled with the middle of a second flow path, a carrier solution for carrying the sample solution that is discharged from the termination side of the first flow path can be circulated, and the acceptor is disposed at a termination of the second flow path.

Also, it is preferable that a filter is disposed in the sample solution supply means. Also, it is possible that the acceptor comprises a plurality of acceptors, and positional relationships between a sample solution discharge portion at the termination of the first flow path or the second flow path and the respective acceptors are relatively movable. Alternatively, it is possible that a downstream side of the second flow path is divided into a plurality of diverging pipes, and the acceptors are disposed downstream of the respective diverging pipes.

According to the present invention, the microorganisms can be separated one by one with high efficiency and with high probability. Also, even the microorganisms that are lower than about 10 µm can be separated one by one while the microorganisms remain alive. For that reason, if the culture of the separated microorganisms is made a success, the microorganisms can be readily isolated, and the performance of the microorganisms can be evaluated and can be effectively used for diverse industrial purposes.

### BRIEF DESCRIPTION OF THE DRAWINGS

Fig. 1 is a schematic structural diagram showing a microorganism separation device according to a first embodiment of the present invention.
Fig. 2 is a schematic structural diagram showing a microorganism separation device according to a second embodiment of the present invention.
Fig. 3 is a flowchart showing the operation procedure of a microorganism separation device according to the second embodiment.
Figs. 4 are detailed diagrams showing a coupling portion of a first flow path 12a and a second flow path 13a in the second embodiment, in which Fig. 4(1) is a side view as in Fig. 2, and Fig. 4(2) is a perspective view taken along a line A-A of Fig. 4(1).
Fig. 5 is a schematic structural diagram showing a microorganism separation device according to a third embodiment of the present invention.
Fig. 6 is a schematic structural diagram showing a microorganism separation device according to a fourth embodiment of the present invention.
Fig. 7 is a schematic structural diagram showing a microorganism separation device according to a fifth embodiment of the present invention.

### BEST MODES FOR CARRYING OUT THE INVENTION

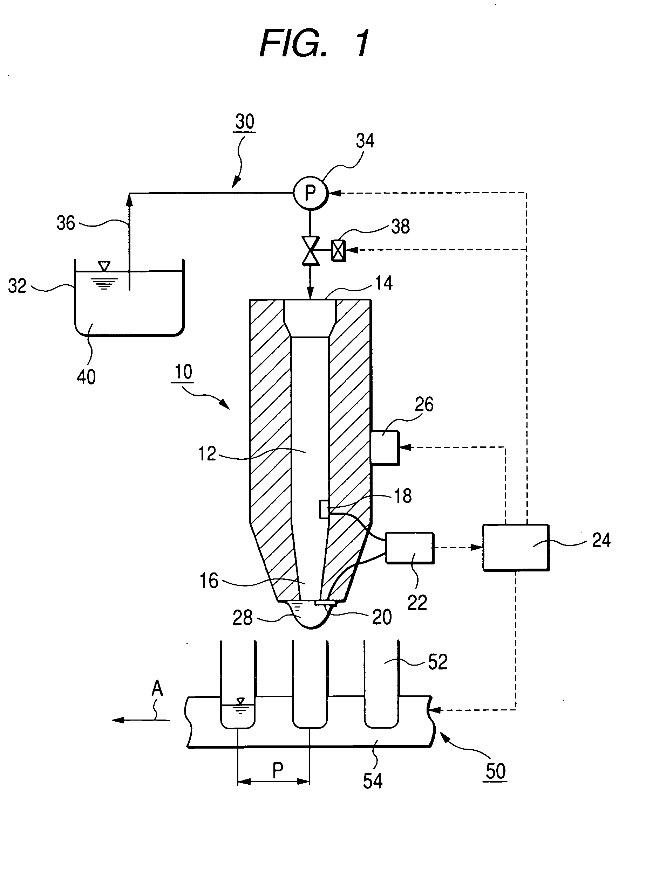

Fig. 1 is a schematic structural diagram showing a microorganism separation device according to a first embodiment of the present invention. The microorganism separation device includes a separator 10, sample solution supply means 30 for supplying a sample solution to the separator 10, and an acceptor moving mechanism 50 that is disposed on a termination side of the separator 10. In Fig. 1, the separator 10 is shown as a cross sectional view, a first flow path 12 is disposed in the center of the separator 10, and an inlet 14 of the sample solution 40 that is supplied from the sample solution supply means 30 is disposed at the beginning of the first flow path 12. The termination of the first flow path 12 forms a tapered portion 16, and electrode portions 18 and 20 are fitted to the upstream side and the downstream side of the tapered portion 16. Electrode portions 18 and 20 are connected to a microorganism sensor 22, and a DC current flows in the microorganism sensor 22. A detection signal of the microorganism sensor 22 is transmitted to a controller 24. A vibrator 26 is fitted to a side of the separator 10, and the operation of the vibrator 26 is controlled according to a signal from the controller 24. It is preferable that the separator 10 is made of a nonconductive material such as plastic or glass. It is desirable that the electrode portions 18 and 20 are made of a material that is low in ionization tendency such as gold, platinum, or carbon since the electrode portions 18 and 20 require corrosion resistance and non-elution property.

The sample solution supply means 30 mainly includes a sample solution reservoir 32, a pipe 36 that connects between the sample solution reservoir 32 and the separator 10, and a pump 34 that is disposed in the middle of the pipe 36. The pump 34 is driven by a motor, and the on/off operation of the pump 34 is controlled according to a signal from the controller 24. The sample solution 40 containing microorganisms therein is in the sample solution reservoir 32. An electromagnetic valve 38 is fitted to the pipe 36 at the outlet side of the pump 34, and the open/close operation of the electromagnetic valve 38 is also controlled according to the signal from the controller 24.

The acceptor moving mechanism 50 includes a rack 54 on which plural acceptors 52 are arranged at pitches P. Upper ends of the respective acceptors 52 are so opened as to receive droplets 28 of the sample solution 40 which drop from the termination of the first flow path 12. The rack 54 is movable in a direction indicated by an arrow A, and movable pitch by pitch according to the signal from the controller 24.

In the above-mentioned structure, the pump 34 is driven to open the electromagnetic valve 38, whereby the sample solution 40 within the sample solution reservoir 32 is fed to the inlet 14 of the separator 10 through the pipe 36, and the first flow path 12 is filled with the sample solution 40. In this state, when the electrode portion 18 that is fitted to the interior of the first flow path 12 and the electrode portion 20 that is fitted to the external are energized, an electric resistance of the sample solution 40 between both of the electrode portions is measured by the microorganism sensor 22. The sample solution 40 includes the microorganisms therein, and when the microorganisms pass through the tapered portion 16, the electric resistance between both of those electrode portions change. Therefore, the microorganism sensor 22 measures a change in the electric resistance between both of those electrodes, thereby making it possible to detect that the microorganisms have passed through the tapered portion 16. According to the knowledge of the present inventors, when the outside dimension of the microorganisms is equal to or more than 2% with respect to the narrowest cross-sectional dimension of the tapered portion 16, it is possible to clearly identify a change in the electric resistance between both of those electrode portions due to the passage of the microorganisms. Since it is general that the outside dimension of the microorganisms is 1 to 5 µm, the microorganisms can be surely detected by the microorganism sensor 22 when the narrowest cross-sectional dimension of the tapered portion 16 is set to about 10 to 50 µm. Also, it is possible that the microorganisms smoothly pass through the narrowest cross-sectional portion of the tapered portion 16.

The detection signal of the microorganisms from the microorganism sensor 22 is transmitted immediately to the controller 24. The controller 24 first stops the pump 34 on the basis of the detection signal of the microorganisms. As a result, the sample solution 40 stops to flow in the first flow path 12, and as shown in Fig. 1, the droplet 28 of the sample solution 40 hangs from the termination of the first flow path 12, and only one microorganism normally exists in the droplet 28. In this state, the separator 10 vibrates, and the droplet 28 is enforcedly separated from the termination of the first flow path 12. The separated droplet 28 drops to the interior of the acceptor 52 that stands by at a position immediately below the termination of the first flow path 12. As a result, the droplet 28 of the sample solution 40 in which only one microorganism exists is received within the accepter 52, and the microorganisms can be separated one by one while the microorganisms remain alive.

Upon completion of the separation of one microorganism through the above operation, the controller 24 stops the operation of the vibrator 26, transmits a drive signal to the rack 54, moves the rack 54 by one pitch in a direction indicated by an arrow A, and allows the acceptor 52 to stand by at the termination of the first flow path 12. Then, the controller 24 again drives the pump 34. As a result, the sample solution 40 again flows out in the first flow path 12, and the sample solution 40 in which no microorganisms exist is discharged to the accepter 52 on standby until the subsequent microorganism passes through the tapered portion 16. Hereinafter, the same operation is repeated to surely separate the microorganisms one by one.

As described above, according to the microorganism separation device of this embodiment, the microorganisms can be separated one by one with high efficiency and high probability. Also, the microorganism sensor 22 detects the microorganisms by means of the electrode portions 18 and 20. Since the microorganism sensor 22 is capable of detecting the microorganisms without staining the microorganisms as in the conventional flow cytometry device, the microorganisms are can be separated from each other while the microorganisms remain alive.

In the above embodiment, the vibrator 26 is used as means for enforcedly separating the droplet 28 from the termination of the first flow path 12. However, the droplet separating means according to the present invention is not limited to the vibrator 26. For example, it is possible that the closed pump 34 is instantaneously driven without using the vibrator 26 as the droplet separating means. Also, it is possible that gas is sprayed onto the droplet 28 so as to separate the microorganisms from each other. Also, it is possible that a piezoelectric element is fitted to the first flow path 12 to instantaneously compress the first flow path 12.

Also, the pump 34 stops when the supply of the sample solution to the first flow path suspends on the basis of the detection result of the microorganisms from the microorganism sensor 22. Alternatively, the electromagnetic valve 38 may be closed instead of the stoppage of the pump 34. Further, it is possible that the electromagnetic valve 38 is instantaneously closed or opened in a state where a back pressure is exerted on the pipe 36 by driving the pump 34 when the droplet 28 is enforcedly separated from the termination of the first flow path 12.

Also, in the above embodiment, a system that measures the electric resistance of the sample solution 40 is used as the microorganism sensor 22. However, the microorganism sensor according to the present invention is not limited to the above structure. There may be employed a system that detects the microorganisms that pass through the first flow path 12 as optical means or a change in the induced current.

Further, in the case of the system that measures the electric resistance, not a DC power supply but an AC power supply may be used. In this case, there is advantage in that the bubbles are suppressed from occurring at the time of energization. In the minute flow path, because the generated bubbles are relatively larger in the size than the flow path, it is important to suppress the bubbles. Since the occurrence of the bubbles leads to a deterioration of the measurement precision, a reduction in the bubbles causes an improvement in the measurement precision. Also, the bubble generation state depends on the frequency of the AC power supply to be used. As the frequency is heightened, the occurrence of the bubbles is gradually suppressed, and the occurrence of bubbles can be hardly confirmed when the frequency exceeds 1 KHz. Also, it is necessary that the cycle of the AC power supply is made shorter than the pulse width (time) of the generated signal. This is because it is difficult to recognize the signal when the cycle of the AC power supply is close to the pulse width of the signal. Accordingly, because it is necessary to separate the waves of the power supply and the waves of the signal from each other by means of a low pass filter, it is preferable that the cycle of the power supply is equal to or lower than 1/10 of the pulse width. Further, it is preferable that the cycle of the power supply is equal to or lower than 1/50 in order to enhance a precision in the detection of the signal that is generated at the time of passage of the microorganisms. Also, it is preferable that the lower limit of the cycle of the AC power supply is equal to or lower than 1 × 10⁻⁸ sec from the viewpoints of the cost performance of an amplifier or a measuring device to be connected.

Also, the acceptor moving mechanism 50 is used as means for sequentially receiving the droplets 28 that drop from the termination of the first flow path 12 by the plural acceptors 52. However, this structure may be replaced with a structure in which the plural acceptors 52 are disposed at fixed positions , and the termination of the first flow path 12 is sequentially moved in correspondence with the openings of the respective reservoirs. That is, it is necessary that the positional relationship between the sample solution discharge portion of the termination of the first flow path 12 and the respective acceptors 52 is relatively movable.

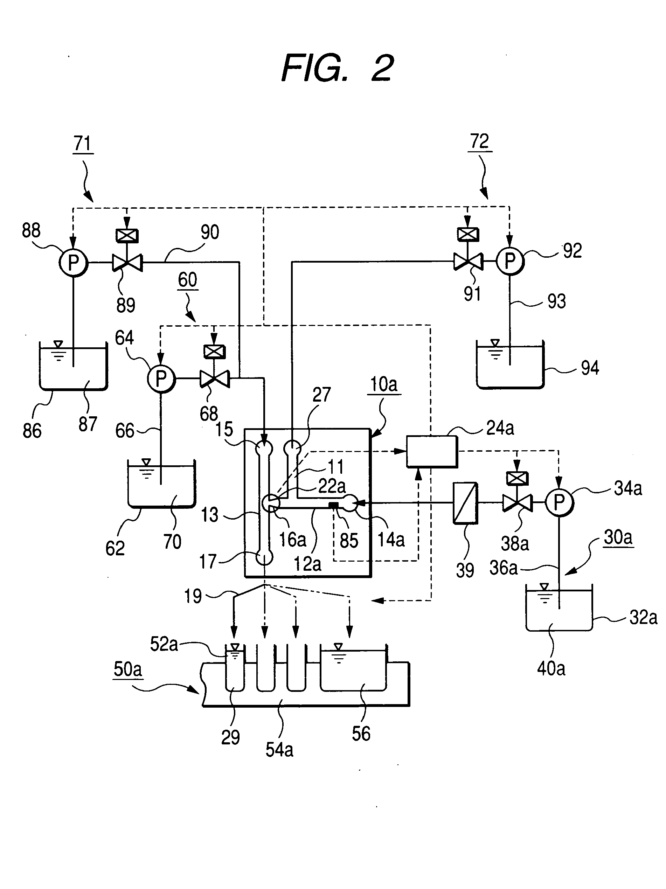

Fig. 2 is a schematic structural view showing a microorganism separation device according to a second embodiment of the present invention. The microorganism separation device includes a separator 10a, sample solution supply means 30a that supplies the sample solution to the separator 10a, an acceptor group 50a that is disposed at the termination side of the separator 10a, carrier solution supply means 60, cleaning solution supply means 71, and suction means 72. The separator 10a has a first flow path 12a, and an inlet 14a of the sample solution which is supplied from the sample solution supply system 30a is formed at the beginning of the first flow path 12a. The termination of the first flow path 12a constitutes a tapered portion 16a, and a microorganism sensor 22a is disposed at the tapered portion 16a. A detection signal of the microorganism sensor 22a is transmitted to a controller 24a. Also, a second flow path 13 is disposed in the separator 10a, and the termination of the first flow path 12a is coupled with the middle of the second flow path 13. The beginning of the second flow path 13 is formed with an inlet 15 of the carrier solution 70 that is supplied from the carrier solution supply means 60, and the cleaning solution 87 that is supplied from the cleaning solution supply means 71. When the carrier solution 70 flows in the second flow path 13, a sample solution 40a of the fine amount which is discharged to the interior of the second flow path 13 from the first flow path 12a is mixed with the flow of the carrier solution 70 into a mixture solution 29. The termination of the second flow path 13 is disposed with an outlet 17 of the mixture solution 29 and a nozzle 19 that is connected to the outlet 17. The nozzle 19 is movable.

The sample solution supply means 30a includes a sample solution reservoir 32a, a pipe 36a that connects the sample solution reservoir 32a and the separator 10a, and a pump 34a that is disposed in the middle of the pipe 36a. The driving of the pump 34a is controlled according to a signal from the controller 24a. The sample solution reservoir 32a is filled with the sample solution 40a containing the microorganism therein. An electromagnetic valve 38a and a filter 39 are fitted to the pipe 36a at the discharge side of the pump 34a. The open/close operation of the electromagnetic valve 38a is controlled according to the signal from the controller 24a. The filter 39 is disposed in order to remove a microorganism or a foreign matter which is larger than the microorganism to be separated from the sample solution 40a in advance. The filter 39 makes it possible to prevent the closed trouble particularly at the tapered portion 16a of the first flow path 12a.

It is preferable that the microorganisms or the foreign matters which are larger than the microorganism to be separated are filtered from the sample solution 40a that is filled in the sample solution reservoir 32a by another filter in advance. With the above structure, an object to be removed by the filter 39 is limited to what is newly generated from the sample solution supply means 30a, thereby making it possible to remarkably reduce a load of the filter 29.

The carrier solution supply means 60 mainly includes a carrier solution reservoir 62, a pipe 66 that connects the carrier solution reservoir 62 and the inlet 15 of the second flow path 13, and a pump 64 that is disposed in the middle of the pipe 66. The driving of the pump 64 is controlled according to the signal from the controller 24a. The carrier solution reservoir 62 is filled with the carrier solution 70. An electromagnetic valve 68 is fitted to the pipe 66 at the outlet side of the pump 64. The open/close operation of the electromagnetic valve 68 is controlled according to the signal from the controller 24a.

The suction means 72 mainly includes a waste solution reservoir 94, a pipe 93 that connects the waste solution reservoir 94 and the outlet 27 of a gas discharge flow path 11 that is located vertically above the first flow path 12a, and a suction pump 92 that is disposed in the middle of the pipe 93. The driving of the suction pump 92 is controlled according to the signal from the controller 24a. The gas is discharged from the waste solution reservoir 94 while the discharged waste solution enters the waste solution reservoir 94. An electromagnetic valve 91 is fitted onto the pipe 93 at the suction side of the suction pump 92. The open/close operation of the electromagnetic valve 91 is controlled according to the signal from the controller 24a.

The suction means 72 can be used to remove the bubbles that exist in the first flow path. Because the separator 10a is filled with a gas in an initial state, it is necessary that the first flow path 12a is first filled with the solution. When the gas exists in the first flow path 12a, it is difficult to accurately control the driving of the sample solution because a compression or expansion is conducted by a change in the pressure. As a procedure of filling the first flow path 12a with the solution, the electromagnetic valves 38a and 91 are opened, and the pump 34a is driven together with the suction pump 92 as required. Upon driving the pump 34a, the pipe 36a is filled with the sample solution 40a.

Also, there is a case in which small bubbles remain within the pipe 36a at the initial solution filling time. Also, there is a case in which bubbles occur in the vicinity of the electrode portions by energization at the time of measurement. In order to remove the bubbles, the electromagnetic valves 38a is closed, the electromagnetic valve 91 are opened, and the suction pump 92 is driven to provide a negative pressure within the first flow path 12a. In this situation, an external air starts to enter from the outlet 17. The electromagnetic valve 38a is opened before an ambient air passes through the tapered portion 16a, and the pump 34a is driven as the occasion demands, thereby making it possible to efficiently remove the bubbles within the first flow path 12a.

The cleaning solution supply means 71 mainly includes a carrier solution reservoir 86, a pipe 90 that connects the carrier solution reservoir 86 and the inlet 15 of the second flow path 13, and a pump 88 that is disposed in the middle of the pipe 90. The carrier solution reservoir 86 is filled with a cleaning solution 87. An electromagnetic valve 89 is fitted to the pipe 90 at the outlet side of the pump 88. The open/close operation of the electromagnetic valve 89 is controlled according to a signal from the controller 24a.

The measured microorganisms are adhered to the tapered portion 16a with the result that the tapered portion 16a may be clogged. As a cleaning method in this situation, the electromagnetic valve 89 is first opened, the pump 88 is driven, and the cleaning solution 87 is allowed to flow in the second flow path 13. Then, the electromagnetic valve 91 is opened, and the suction pump 92 is driven, to thereby allow the cleaning solution 87 to pass through the tapered portion 16a. As a result, the cleaning degree is further enhanced.

In this situation, it is preferable that the cleaning solution 87 is made of an organic solvent such as dichloromethane or trichloroacetic acid, or strong acid such as hydrochloric acid or nitric acid, which is capable of lysing the microorganisms.

A pressure sensor 85 that is located in the first flow path 12a is used mainly at the time of stopping the pump 34a. In the handling of a solution using a minute flow path which is equal to or lower than about 5 mm in diameter, the volume of the flow path is liable to relatively change due to a change in the pressure as compared with a case of using a thick pipe which is equal to or more than 5 mm in diameter. Accordingly, there is a case in which a flow path between the pump 34a and the tapered portion 16a is expanded immediately after the pump 34a has stopped to provide a positive pressure. Therefore, there is a case in which the sample solution 40a flows out toward the second flow path 13 from the tapered portion 16a even if the pump 34a stops. In order to prevent this case, the pump 34a is controlled in such a manner that the measured value of the pressure sensor 85 is transmitted to the controller 24a so that the measured value becomes 0 immediately. Accordingly, the pressure sensor 85 in this situation is capable of achieving the object even if the pressure sensor 85 is replaced with a flow sensor. Since the physicality of the solution to be used depends on the solution, it is possible to omit the pressure sensor if the appropriate operating condition of the suction pump 92 is determined in advance. In addition, in the case where the section of the pipe 93 is made larger than the section of the tapered portion 16a, when the electromagnetic valve 95 is opened immediately after the pump 34a stops, most of the sample solution which is high in pressure within the first flow path 12a flows in the pipe 93 rather than the second flow path 13.

The acceptor group 50a includes plural acceptors 52a, a waste solution reservoir 56, and a rack 54a on which those reservoirs are arranged. The upper ends of the respective acceptors 52a and the waste solution reservoir 56 are opened, thereby being capable of receiving the mixture solution 29 which is discharged from the nozzle 19. The nozzle 19 is movable as described above, and moves at a position immediately above an arbitrary acceptor 52a or the waste solution reservoir 56, thereby making it possible to discharge the mixture solution 29 toward the interior of the intended reservoir.

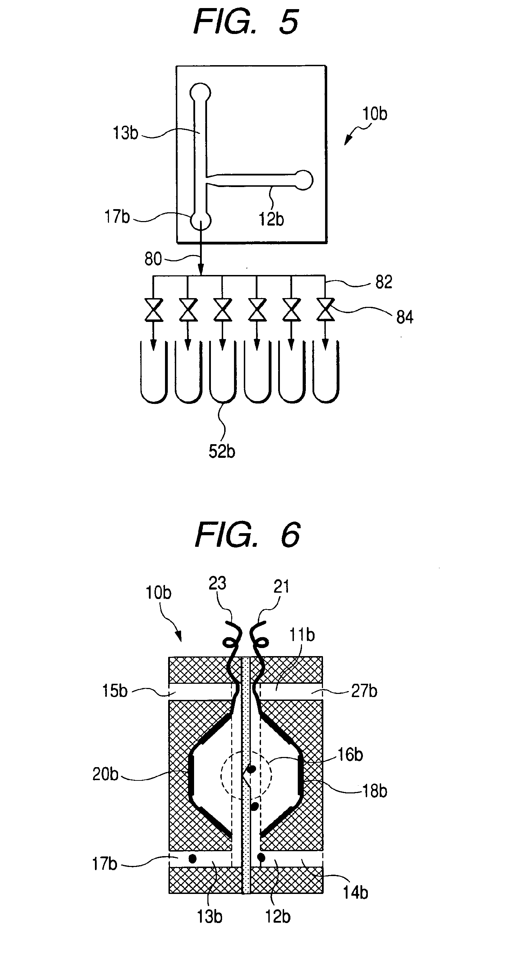

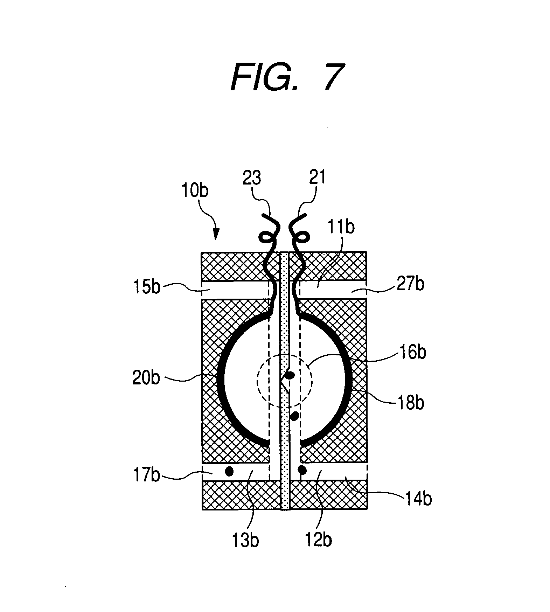

Fig. 6 is a schematic structural diagram showing a separator according to a fourth embodiment of the present invention. Fig. 7 is a schematic structural diagram showing a separator according to a fifth embodiment of the present invention. The microorganism separation device includes an outlet 27 that connects a gas discharge flow path 11b that is disposed vertically above the tapered portion 16b and the pipe 93, an inlet 14b that connects a first flow path 12b into which the sample solution flows and the pipe 36a, and an inlet 15b that connects a second flow path 13b into which a culture medium mainly flows and the pipe 66. The microorganism separation device also includes an outlet 17b from which the mixture solution flows out, an electrode portion 18b that is disposed within the first flow path 12b, an electrode portion 20b that is disposed within the second flow path 13b, an electrode 21 including the electrode portion 18b, and an electrode 23 including the electrode portion 20b. Also, the electrode portion 18b and the electrode portion 20b are located on a normal line that passes through the center of the flow path section of the tip of the tapered portion 16b.

A portion where a distance that connects the electrode portion 18b, the tapered portion 16b, and the electrode portion 20b becomes shortest is a portion where a large amount of currents flow at the time of measurement. For that reason, when the shortest distance that is energized by bubbles is changed, the resistance at the time of measurement greatly changes, thereby deteriorating the S/N ratio. Accordingly, it is preferable that the electrode portion is not linear but facial or of a pinholder directed toward the orifices in order to make it difficult to suffer from the above influence. In addition, in order to further make it difficult to suffer from the influence of the bubbles, it is difficult that the electrode is made up of plural electrode portions, for example, a polygon is made up of planes. It is more preferable to apply an installation method in which distances between the respective faces and the tapered portion 16b are approximated. It is most preferable that the electrode portion is shaped in a serving dish, and the distances from all of points on the electrode portion to the tapered portion 16b are approximated, thereby making it possible to measure the signal that is generated at the time where the microorganisms pass through the tapered portion with high precision.

Also, when the distance between the electrode portion and the tapered portion 16b becomes longer, it is desirable that the distance is preferably equal to or less than 10 mm, and more preferably equal to or less than 5 mm because a precision in the measurement is deteriorated.

In addition, in the case of a plate-like electrode portion, it is difficult to improve the cleaning degree since the flow path configuration is complicated. Accordingly, it is desirable that one of the two electrode portion surface at a side opposite to the orifice side is sealed as much as possible so as to provide a structure that is out of contact with the solution. With the above structure, the flow path configuration is simplified, and the cleaning simplicity is improved.

Also, the second flow path 13b improves a precision in the separation when the solution flows by a laminar flow at the time of discharging culture medium. Accordingly, it is desirable that the short side of the section of the second flow path is equal to or less than 10 mm, preferably equal to or less than 5 mm, and more preferably equal to or less than 1 mm, thereby being capable of improving a precision in the separation.

The suction means 72 mainly includes a waste solution reservoir 94, and a suction pump 92 that is disposed in the middle of the pipe 93 between the waste solution reservoir 94 and the first flow path 12a. The driving of the suction pump 92 is controlled according to the signal from the controller 24a. The gas is discharged from the waste solution reservoir 94 while the discharged waste solution enters the waste solution reservoir 94. An electric valve 91 is fitted to the pipe 93 at the suction side of the suction pump 92. The open/close operation of the electromagnetic valve 91 is controlled according to the signal from the controller 24a.

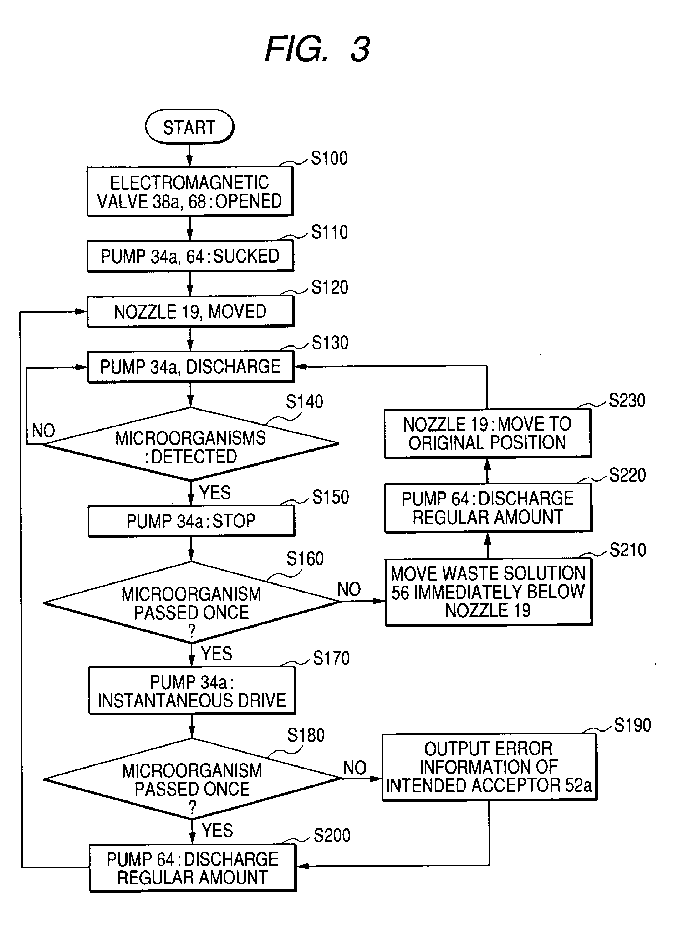

Fig. 3 is a flowchart showing the operation procedure of the microorganism separation device. First, the electromagnetic valve 38a and the electromagnetic value 68 are opened (S100). Then, the pump 34a and the pump 64 are actuated to suck the sample solution 40a within the sample solution reservoir 32a and the carrier solution 70 within the carrier solution reservoir 62, respectively. Then, the pump 34a and the pump 64 are stopped in a state where the first flow path 12a is filled with a sample solution 40a, and the second flow path 13 is filled with a carrier solution 70 (S110). Then, the nozzle 19 is moved to a position immediately above the intended acceptor 52a (S120). Then, the pump 34a is actuated to discharge the sample solution 40a within the first flow path 12a to the second flow path 13 side (S130). The sample solution 40a contains the microorganisms therein, and the microorganism sensor 22a is capable of detecting that the microorganisms have passed through the tapered portion 16a (S140). While the microorganism sensor 22a does not detect the microorganisms, the procedure is returned to Step 130 in which the sample solution 40a continues to be discharged by the pump 34a. The pump 34a stops immediately after the microorganism sensor 22a detects the microorganisms (S150). Then, the microorganism sensor 22a verifies whether the number of passages of the microorganisms is once or plural times (S160).
When the number of passages of the microorganisms is once, the pump 34a is first instantaneously driven (S170). Then, the sample solution 40a within the first flow passage 12a of the fine amount is discharged within the second flow path 13. There is the high probability that only one microorganism is mixed in the sample solution 40a of the fine amount. However, since there is the possibility that the excessive microorganisms are mixed into the sample solution 40a of the fine amount during the operation of S170, the microorganism sensor 22a again verifies whether the number of passages of the microorganisms is once or plural times (S180). When the number of passages of the microorganisms is plural, the plural microorganisms are mixed into the mixture solution that is intended to be received in the intended acceptor 52a. As a result, the error information is outputted (S190).

Subsequently, the pump 64 is instantaneously driven regardless of the verification result in Step S180, and the carrier solution 70 within the second flow path 13 is discharged toward the nozzle 19 side by a regular amount (S200). As a result, the sample solution 40a of the fine amount which has been discharged to the interior of the second flow path 13 from the first flow path 12a is mixed with the flow of the carrier solution 70. The mixture solution 29 is discharged from the nozzle 19 through the outlet 17, and then received in the intended acceptor 52a. It is desirable that a period of time during which the pump 64 is instantaneously driven is the necessity minimum which allows the sample solution 40a of the fine amount to surely reach the intended acceptor 52a. With the above operation of S120 to S200, the microorganism separation operation of one time is completed. Subsequently, the operation is returned to S120, and the same microorganism separation operation is repeated. A acceptor 52a that has outputted the error information in Step S190 is included in the plural acceptors 52a that receive the mixture solution 29, respectively. Accordingly, since the mixture solution 29 of the acceptor 52a that has outputted the error information is low in the availability, such a mixture solution 29 is normally abandoned.

In the verification by the microorganism sensor 22a in Step S160, when the number of passages of the microorganisms is plural, the nozzle 19 is moved to a position immediately above the waste solution reservoir 56 (S210). The pump 64 is instantaneously driven, and the carrier solution 70 within the second flow path 13 is discharged at the nozzle 19 side by a regular amount (S220). The operation in Step S220 is identical with that in Step S200, and the unnecessary mixture solution 29 that contains two or more microorganisms therein is discharged from the nozzle 19 through the outlet 17, and then received in the waste solution reservoir 56. Then, the nozzle 19 is moved to an original position where the intended acceptor 52a exists (S230). Thereafter, the operation is returned to Step S130, immediately, and a sequence of separating operation is again repeated.

In the above operation procedure, the discharge of the respective solutions is controlled by driving or stopping the pump 34a or the pump 64 in the operation of Steps S130, S150, S170, S200, and S220. Alternatively, it is possible that those pumps are always driven, and the discharge of the respective solutions is controlled by opening or closing the electromagnetic valve 38a or the electromagnetic valve 68 in a state where the back pressure is exerted on the respective flow paths instead of the driving or stopping of the pump 34a or the pump 64.

Also, in the above second embodiment, the plural acceptors 52a and the waste solution reservoir 56 are disposed at the fixed positions, and the nozzle 19 is moved in correspondence with the openings of the respective reservoirs. However, on the contrary, it is possible that the acceptor 52a and the waste solution reservoir 56 are arbitrarily movable by the moving mechanism, and an intended movement is executed in correspondence with the nozzle 19 of the fixed position as in the above first embodiment.

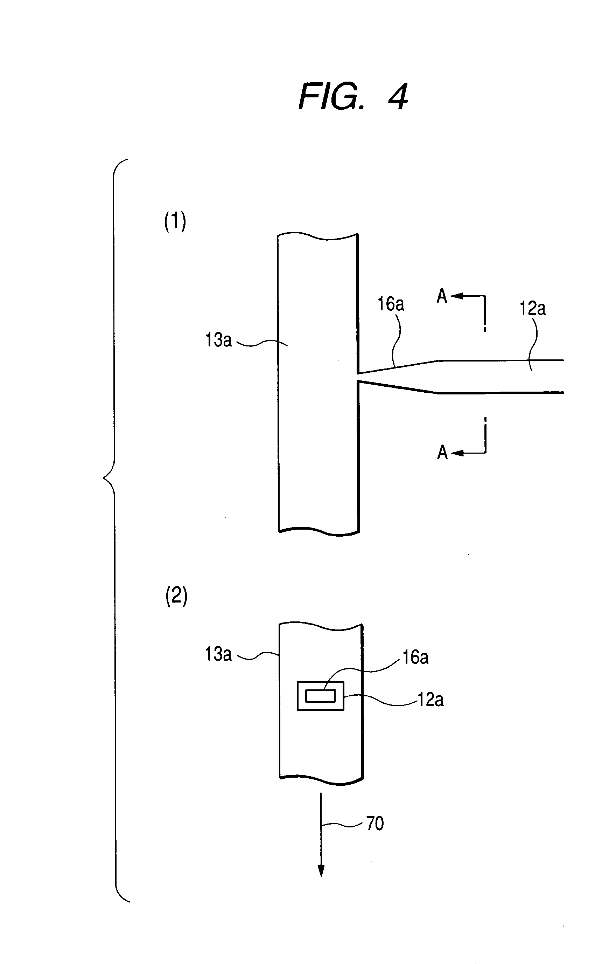

Fig. 4 is a detailed diagram showing a coupling portion of the first flow path 12a and the second flow path 13a in the second embodiment, in which Fig. 4(1) is a side view as in Fig. 2, and Fig. 4(2) is a perspective view taken along a line A-A of Fig. 4(1). The opening configuration of the tapered portion 16a of the first flow path 12a with respect to the second flow path 13a is rectangular. Then, the rectangle has a length in a direction perpendicular to a forwarding direction longer than a length in the forwarding direction of the carrier solution 70 that flows in the second flow path 13a. Because the opening configuration of the tapered portion 16a is thus rectangular, when the pump 64 is instantaneously driven, and the carrier solution 70 within the second flow path 13 is discharged at the nozzle side 19 side by the regular amount in Step S200 shown in Fig. 3, there is the low possibility that the microorganism in the sample solution 40a that is extruded to the interior of the second flow path 13 flows back to the first flow path 12a side from the opening of the tapered portion 16a. For that reason, it is possible that the microorganisms are surely fed to the nozzle 19 by the carrier solution 70.

Fig. 5 is a schematic structural diagram showing a microorganism separation device according to a third embodiment of the present invention. The microorganism separation device has a separator 10b that is identical in the structure with the separator 10a shown in the second embodiment, and has a first flow path 12b, a second flow path 13b, and an outlet 17b. A discharge pipe 80 of the mixture solution is connected to the outlet 17b. The discharge pipe 80 is branched into plural diverging pipes 82, and a changeover valve 84 is fitted to each of the branch pipes 82. Also, an acceptor 52b is disposed downstream of each of the branch pipes 82.

In the third embodiment, when the mixture solution that contains the microorganisms therein flows into the discharge pipe 0 from the outlet 17b, only a changeover valve 84 of the branch pipe 82 corresponding to the intended acceptor 52b is opened, and other changeover valves 84 are closed. With this operation, the microorganisms can be shared to the individual acceptors 52b one by one and received therein. According to this embodiment, since the microorganism separation can be implemented by merely controlling the open/close operation of the changeover valve 84, there is advantage in that the moving mechanism of the acceptors or the nozzle shown in the first or second embodiment is not required.

Also, in the above respective embodiments, a case in which the microorganisms are received in one acceptor one by one was described. However, the microorganism separation device according to the present invention can be applied to a case in which microorganisms that are different in the type are separated to the respective types. In other words, in the case where plural microorganisms that are different in the type exist in the sample solution, it is general that the microorganisms are different in the size and the configuration in each of the types. Accordingly, in the case the microorganism sensor has a function that is capable of identifying the microorganisms for each of the microorganisms, it is possible that the plural microorganisms of the same type are received together in a dedicated acceptor on the basis of the identification result. With application of the above separation method, there is advantage in that the number of acceptors to be prepared can be remarkably reduced. In addition, since it is possible that only the intended microorganisms are received in the dedicated acceptor, and all of the unintended microorganisms are treated as the waste solution, the intended microorganism separation can be conducted.

### INDUSTRIAL APPLICABILITY

When the microorganisms that have been separated by using the microorganism separation device according to the present invention are cultured, it is possible to readily isolate the microorganisms. Also, it is possible to evaluate the performance of the microorganisms, and to effectively use the microorganisms for the diverse industrial purposes.

## Claims

1. A microorganism separation device, comprising:
a sample solution reservoir that stores a sample solution containing microorganisms therein;
sample solution supply means for supplying the sample solution stored within the sample solution reservoir to a first flow path;
a microorganism sensor that is capable of detecting a monadelphous microorganism in the sample solution that passes through the first flow path;
sample solution separating means for stopping to supply the sample solution to the first flow path and discharging the detected microorganism together with the sample solution from a termination side of the first flow path on the basis of a detection result of the microorganism by the microorganism sensor; and
an acceptor that receives the sample solution that is discharged from the termination side of the first flow path.

2. The microorganism separation device according to claim 1, wherein the sample solution separating means can be controlled so that the sample solution that is discharged from the termination side of the first flow path includes one microorganism.

3. The microorganism separation device according to claim 1 or 2, wherein the termination of the first flow path is coupled with the middle of a second flow path, a carrier solution for carrying the sample solution that is discharged from the termination side of the first flow path is made capable of circulating, and the acceptor is disposed on a termination side of the second flow path.

4. The microorganism separation device according to any one of claims 1 to 3, wherein a filter is disposed in the sample solution supply means.

5. The microorganism separation device according to any one of claims 1 to 4, wherein the acceptor comprises a plurality of acceptors, and the positional relations between a sample solution discharge portion at the termination of the first flow path or the second flow path and the respective acceptors are relatively movable.

6. The microorganism separation device according to claim 3 or 4, wherein a downstream side of the second flow path is divided into a plurality of diverging pipes, and the acceptors are disposed downstream of the respective diverging pipes.

7. A microorganism separation device, comprising:
sample solution supply means for injecting a sample solution that contains a microorganism therein into a first flow path;
a first outlet that discharges excess sample solution and bubbles;
carrier solution supply means for injecting the carrier solution into a second flow path; and
a second outlet that discharges a carrier solution together with the microorganism,
wherein the first flow path and the second flow path are connected to each other through an orifice, and a pair of electrodes that are disposed in each of the first flow path and the second flow path are capable of detecting passing of the microorganism through the orifice.

8. The microorganism separation device according to claim 7, wherein an electrode that is disposed in the first flow path and an electrode that is disposed in the second flow path constituting the microorganism sensor are on a normal line that passes through the center of the orifice.

9. The microorganism separation device according to claim 7, wherein at least one electrode of an electrode that is disposed in the first flow path and an electrode that is disposed in the second flow path constituting the microorganism sensor is made up of a plurality of faces, and a normal line that passes through the respective faces passes through the orifice.

10. The microorganism separation device according to claim 7, wherein at least one electrode of an electrode that is disposed in the first flow path and an electrode that is disposed in the second flow path constituting the microorganism sensor exists on a sphere centered on the center of the orifice.

11. The microorganism separation device according to any one of claims 1 to 8, wherein a sensor that measures a pressure or a flow rate is disposed in the first flow path.

12. The microorganism separation device according to any one of claims 1 to 9, wherein a power supply that applies a power to the sensor is AC.
